# EUROPEAN PATENT SPECIFICATION

(11) **EP 3 493 178 B1**
(45) Date of publication and mention of the grant of the patent: **06.03.2024**
(21) Application number: 17204922.3
(22) Date of filing: 01.12.2017
(51) Int. Cl.: G08G 1/16, G06V 20/58, G06V 20/59, B60W 50/14

(54) **DRIVER ATTENTIVENESS DETECTION METHOD AND DEVICE**
VERFAHREN UND VORRICHTUNG ZUR ERKENNUNG DER AUFMERKSAMKEIT EINES FAHRERS
PROCÉDÉ ET DISPOSITIF DE DÉTECTION DE L'ATTENTION D'UN CONDUCTEUR

(43) Date of publication of application: 05.06.2019
(73) Proprietor: Veoneer Sweden AB, 447 83 Vårgårda (SE)
(72) Inventor: Boström, Ola, 413 20 Göteborg (SE)
(74) Representative: Westpatent AB

(56) References cited:
- GB-A- 2 500 690
- SE-C2- 520 360
- US-A1- 2004 150 514
- US-A1- 2014 139 355
- US-A1- 2017 247 031

## Description

The present disclosure relates to a vehicle safety system comprising at least one image sensor device, a control unit arrangement and at least one warning device. The image sensor device is arranged to detect eye configurations of a vehicle driver.

When changing lanes from a present lane to a target lane with an ego vehicle, it is desired to avoid collisions with vehicles traveling in the target line. In particular, there is a risk of collision with vehicles traveling in the target lane which are in the so-called blind spot field, where these vehicles are more or less difficult to detect via the external rear-view mirror that is positioned at the side of the ego vehicle that faces the target lane, and also via the internal rear-view mirror.

It is previously known that said external rear-view mirror is equipped with a warning light source that is adapted to emit a light when a vehicle is determined to be present in the blind spot field. Such a determining is for example enabled by means of a vehicle environment detecting system such as a vehicle radar system comprised in the ego vehicle. This means that when a driver of the ego vehicle is about to change lanes and looks in the suitable external rear-view mirror and there is a vehicle in the blind spot field and thus is difficult to see, the driver is warned by the emitted light from the warning light source.

In order to enable the driver to be warned in this manner, it is important that the driver looks in the suitable external rear-view mirror when a lane-change is due. If the driver performs a lane-change without looking in the suitable external rear-view mirror, the driver will not notice the emitted light from the warning light source.

GB 2500690 discloses a driver monitoring system, where, if a vehicle is detected in a blind spot by a blind spot monitoring system, an output alert can be modified depending on whether the driver is determined as looking at the blind spot.

Other relevant prior art is disclosed in documents US 2014/139355 A1, US 2004/150514 A1 and US 2017/247031 A1.

It is thus desired to obtain a blind spot field warning at lane change that is more robust and reliable than previously known equipment of this kind.

Said object is achieved by means of a vehicle safety system according to claim 1 of the appended claims.

Said object is also achieved by means of a method according to claim 4 of the appended claims.

According to some aspects, the vehicle safety system further is adapted to determine the following cases:
- If the vehicle driver is about to change lanes.
- If there at least partly is a target vehicle within a blind spot field that corresponds to the possible lane change.
- If the vehicle driver at least partly is looking outside a warning area that corresponds to the possible lane change.

If all these cases are fulfilled, the vehicle safety system is adapted to issue the second warning signal.

Other examples are disclosed in the dependent claims.

A number of advantages are obtained by means of the present disclosure. Mainly, a much less complicated device and method for detection of vehicle driver attentiveness by determining where a driver is looking is provided, without the need for calculating such things as gaze angles, head angles and models for facial features.

### BRIEF DESCRIPTION OF THE DRAWINGS

The present disclosure will now be described more in detail with reference to the appended drawings, where:
- Figure 1: shows a top view of an ego vehicle and a target vehicle in a dead spot field.
- Figure 2: shows a schematic partial cut-open side view of the ego vehicle with a driver;
- Figure 3: shows a schematic partial cut-open back view of the ego vehicle with a driver;
- Figure 4: shows a schematic overview of a vehicle safety system according to the present disclosure; and
- Figure 5: shows a flowchart for a method according to the present disclosure.

### DETAILED DESCRIPTION

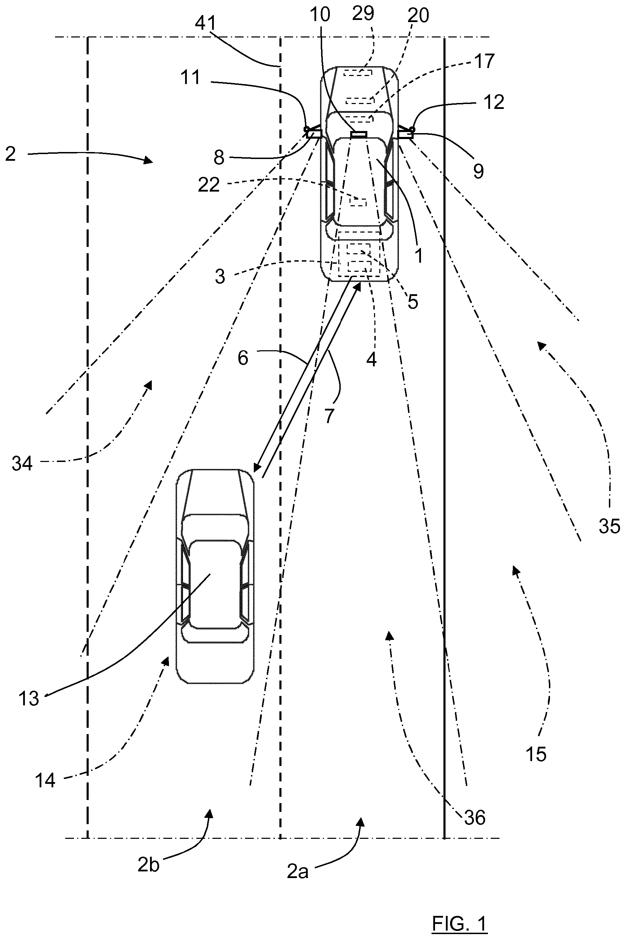

Figure 1 schematically shows a top view of an ego vehicle 1 arranged to run in a first lane 2a on a road 2, where the ego vehicle 1 comprises a vehicle radar system 3. The vehicle radar system 3 comprises a radar sensor arrangement 4 that is arranged to distinguish and/or resolve targets from the surroundings by transmitting signal 6 and receiving corresponding reflected signals 7 and using a Doppler effect in a previously well-known manner. The signals 6, 7 are according to some aspects constituted by sweep signals in the form of FMCW (Frequency Modulated Continuous Wave) chirp signals 6 of a previously known kind.

The vehicle radar system 3 further comprises a radar control unit 5 that is connected to the radar sensor arrangement 4 and is arranged to provide azimuth angles, distance and radial velocity of possible target object detections by simultaneously sampling and analyzing phase and amplitude of the received signals in a previously well-known manner.

The ego vehicle comprises a left-hand external rear-view mirror 8, a right-hand external rear-view mirror 9 and an internal rear-view mirror 10. Each external rear-view mirror 8, 9 is equipped with a corresponding warning light source 11, 12 that is adapted to emit a warning light when a target vehicle 13 travelling in an adjacent second lane 2b, constituting a target lane 2b, is determined to at least partly be present in a left-hand blind spot field 14 or right-hand blind spot field 15, where a blind spot field 14, 15 is outside a coverage 34, 35 of the external rear-view mirrors 8, 9 and a coverage 36 of the internal rear-view mirror 10.

Such a determining is generally enabled by means of a vehicle environment detecting system, according to some aspects by means of the vehicle radar system 3 comprised in the ego vehicle 1. This means that when a driver of the ego vehicle is about to change lanes from the first lane 2a to the target lane 2b and looks in the left-hand external rear-view mirror 8, the radar system is adapted to determine if there is a target vehicle 13 in a blind spot field 14, 15. Here, a target vehicle 13 is determined to be in the left-hand blind spot field 14, and thus difficult to see.

A safety control unit 22 is then informed of this fact by radar control unit 5, where the safety control unit 22 then is adapted to warn the driver by initiating light emission from a left-hand warning light source 11 at the left-hand external rear-view mirror 8. It is, however, necessary that the driver looks at the left-hand external rear-view mirror 8 when being about to change lanes in order to discover the emitted light from the left-hand warning light source 11.

In general, detection of vehicle driver attentiveness is desirable since loss of, or in any way deteriorated, attentiveness impairs the ability of a vehicle to control the vehicle and to be aware of the surroundings.

A problem regarding deteriorated attentiveness is that, generally, persons do not detect their own lack of attentiveness when it appears. It is thus difficult for a person to be aware of lack of attentiveness, and to take action for counteraction. Deteriorated attentiveness may be due to different factors such as distracting objects or gadgets as well as drowsiness.

Today, many devices and methods for detecting attentiveness of a vehicle driver are known, and in most cases one or more digital cameras capture images of a vehicle driver's head features and the position of the eyes in order to calculate a gaze angle, and to determine where the gaze falls.

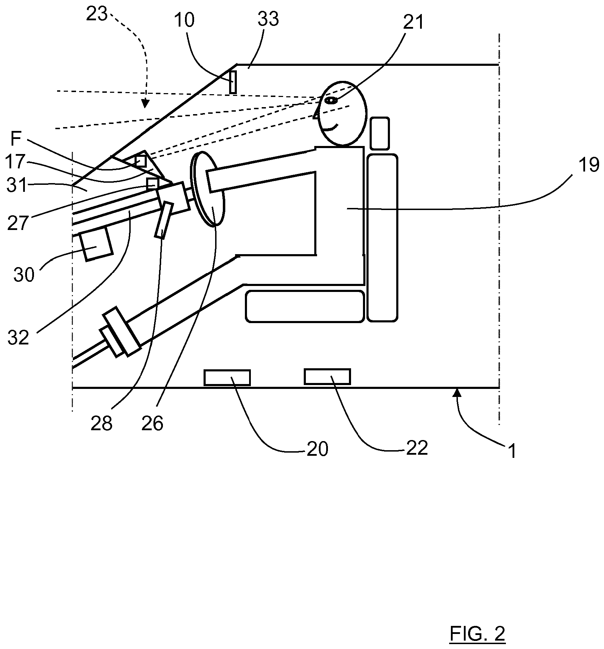

An example is shown in Figure 2 that schematically shows a cut-open part of the ego vehicle 1, where the ego vehicle 1 comprises a near infrared (NIR) internal digital camera device 17 positioned on a dashboard 31 with two NIR light sources F such as flashes, where the internal digital camera device 17 is comprised in a driver monitoring system (DMS). The internal digital camera device 17 is arranged for capturing images of the eyes 21 of a person 19 driving the vehicle 1, a driver 19, and transferring these images to an image control unit 20. The image control unit 20 is adapted to process the acquired images and determine the position of the driver's eyes 21, and to determine where the gaze 23 of the eyes 21 falls.

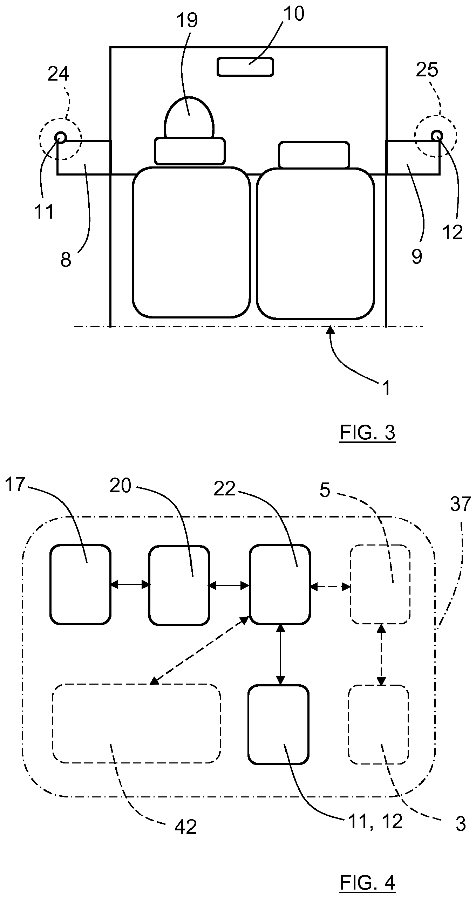

According to the present disclosure, also with reference to Figure 3, schematically showing a partially cut-open back view of the driver 19 in the ego vehicle 1, the image control unit 20 is adapted to determine if the gaze 23 of the eyes 21 falls within a warning light window 24, 25, where each warning light window 24, 25 encompasses a warning light source 11, 12, when the warning light source 11, 12 has been initiated to emit a warning light that generally is constituted by a first warning signal.

In Figure 3, a left-hand warning light window 24 is indicated for the left-hand warning light source 11, and a right-hand warning light window 25 is indicated for a right-hand warning light source 12 at the right-hand external rear-view mirror 9.

Generally, the safety control unit 22 is adapted to acquire information regarding:
- if the driver 19 is about to change lanes,
- if there at least partly is a target vehicle 13 within a blind spot field 14 that corresponds to the possible lane change, and
- if the gaze 23 of the eyes 21 falls within a warning light window 24, 25 that corresponds to the possible lane change.

In the present example, there is a target vehicle 13 within a blind spot field 14, and if it also is determined that the driver 19 is about to change to a lane where the target vehicle 13 travels, and if it also is determined that the gaze 23 of the eyes 21 falls outside the left-hand warning light window 24, a second warning signal is issued to the driver. The second warning signal is according to some aspects constituted by a sound signal, a tactile signal such as an induced vibration at a steering wheel 26, a dashboard warning light signal 27, or any combination of these.

According to some aspects, in order to acquire information regarding if the driver 19 is about to change lanes, the safety control unit 22 is adapted to:
- determine a signal indicator lever 28 setting,
- determine change of steering angle, and/or
- determining vehicle movement in relation to road markings 41.

For the above purposes, the ego vehicle 1 comprises at least one of an external front-facing camera arrangement 29, and a yaw angle sensor arrangement 30, where the safety control unit 22 is adapted to acquire data regarding a signal indicator lever setting, and applicable sensor data. Generally, according to some aspects, there is a number of sensor devices 42 that provide sensor data to the safety control unit 22. Such sensor devices for example comprise the yaw angle sensor arrangement 30, a sensor for the signal indicator lever setting, the external front-facing camera arrangement 29.

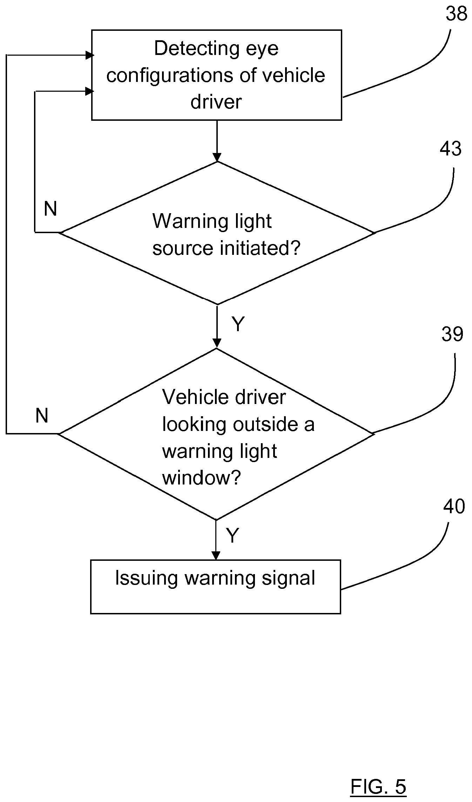

With reference to Figure 5, the present disclosure relates to a method for detecting attentiveness of a vehicle driver 19 with respect to at least one warning device 11, 12 that is initiated to emit a first warning signal, where the method comprises:
38: Detecting eye configurations of the vehicle driver 19.
43: When said warning device 11, 12 is initiated to emit the first warning signal, the method further comprises:
   39: Determining if the vehicle driver 19 at least partly is looking outside a warning area 24, 25 that at least partly encompasses said warning device 11, 12, and if that is the case:
   40: Issuing a second warning signal.

The present disclosure is not limited to the examples above, but may vary freely within the scope of the appended claims. For example, there may be one or more NIR camera devices 17 and one or more NIR flashes F, where the image control unit 20 is arranged to send trigger signals to the internal digital camera device 17 and flashes F. The internal digital camera device 17 should be placed as close as possible to the line of sight of the driver 19 when the driver 19 is looking forward. However, the placement is more important in the horizontal direction than the vertical direction.

Other types of digital camera systems, with or without flashes, are conceivable. One advantage with an infrared camera is that it does not matter if the driver's eyes are obscured, for example by sunglasses. Other types of image sensors are also conceivable, where generally an image sensor device 17 is adapted to detect eye configurations of the vehicle driver 19.

Examples for camera positions are at the steering wheel 26, at a steering column 32, at the dashboard 31 or in the inner roof lining 33 as indicated in Figure 1. Other examples are airbag covers, sun visors, the internal rear-view mirror 10, and/or in the vehicle A-pillars.

If the internal digital camera device 17 is positioned straight in front of the driver 19, it is less complicated to determine if the driver 19 is looking inside the predetermined field of view due to more available data. However, for practical reasons this may not be possible due to space limitations, design reasons and view obstructive reasons.

The control units 5, 20, 22 are according to some aspects comprised by one common or several separate units, and may also be comprised in another unit. The control units generally form a control unit arrangement 5, 20, 22.

According to some aspects, where the drivers gaze 23 falls is determined by using stored models of eye configuration samples that are indicative of eyes that look inside a predetermined field of view such as warning light window 24, 25. It is possible that stored models of eye configuration samples that are indicative of eyes that look outside a predetermined field of view, or both, are used instead.

Generally, the vehicle driver 19 is determined to be looking outside a warning light window 24, 25 when the gaze 23 falls outside that warning light window 24, 25 to a predetermined extent.

Generally, with reference to Figure 4, the present disclosure relates to a vehicle safety system 37 comprising at least one internal digital camera device 17, a control unit arrangement 5, 20, 22 and at least one warning light source 11, 12 or other type of warning device. According to some aspects, the vehicle safety system 37 comprises at least one environmental detection device 3 such as the radar system 3, a Lidar arrangement, an external camera device or similar, where the environmental detection device is adapted to detect if a target vehicle 13 at least partly is present within a blind spot field 14, 15 that is outside a coverage 34, 35, 36 of available rear-view mirrors 8, 9, 10 for the driver 19. The vehicle safety system 37 also comprises sensor devices 42 that are adapted to provide sensor data to the control unit arrangement 5, 20, 22.

The coverages 34, 35, 36 mentioned above are related to the coverages 34, 35, 36 that are available for the driver 19. These coverages 34, 35, 36 of course change due to positioning of the rear-view mirrors 8, 9, 10, the physical properties of the driver 19 such as height as well as the driver's present head position. The blind spot fields 14, 15 are according to some aspects predetermined from a model that covers most of all normal cases. According to other aspects, the blind spot fields 14, 15 are determined adaptively by means of determined eye positions of the driver 19 relative the rear-view mirrors 8, 9, 10.

The present disclosure is directed towards detecting whether a driver is noticing an activated warning light source 11, 12 associated with an external rear-view mirror 9, 10. Generally, the present disclosure is directed towards detecting whether the driver 19 is noticing a first warning signal emitted from a warning device 11, 12. Generally, each warning light window 24, 25 is constituted by a corresponding warning area 24, 25.

The parts of the vehicle safety system 37, as well as other parts mentioned, normally comprise many more components that those mentioned, and it is to be understood that the present description is directed towards an understanding of the present disclosure. Components not shown or described are considered to be obvious for the skilled person, having well-known functionalities.

Generally, the present disclosure relates to a vehicle safety system 37 comprising at least one image sensor device 17, a control unit arrangement 5, 20, 22 and at least one warning device 11, 12, where said image sensor device 17 is arranged to detect eye configurations of a vehicle driver 19. When said warning device 11, 12 is initiated to emit a first warning signal, the control unit arrangement 5, 20, 22 is arranged to determine if the vehicle driver 19 at least partly is looking outside a warning area 24, 25 that at least partly encompasses said warning device 11, 12, and in that case to issue a second warning signal.

According to the invention, the vehicle safety system 37 further comprises at least one environmental detection device 3 that is adapted to determine whether a target vehicle 13 at least partly is within a blind spot field 14, 15 that is outside a coverage 34, 35, 36 of available rear-view mirrors 8, 9, 10 for the vehicle driver 19.

According to some aspects, the vehicle safety system 37 further is adapted to determine the following cases:
- if the vehicle driver 19 is about to change lanes,
- if there at least partly is a target vehicle 13 within a blind spot field 14, 15 that corresponds to the possible lane change, and
- if the vehicle driver 19 at least partly is looking outside a warning area 24, 25 that corresponds to the possible lane change,
and if all these cases are fulfilled, the vehicle safety system is adapted to issue the second warning signal. According to some aspects, the vehicle safety system 37 is adapted to determine if the vehicle driver 19 is about to change lanes by being adapted to:
- determine a signal indicator lever 28 setting,
- determine change of steering angle by means of a yaw angle sensor arrangement 30, and/or
- determine vehicle movement in relation to road markings by means of an external front-facing camera arrangement 29.

Generally, the present disclosure relates to a method for detecting attentiveness of a vehicle driver 19 with respect to at least one warning device 11, 12 that is initiated to emit a first warning signal, where the method comprises:
38: detecting eye configurations of the vehicle driver 19. Furthermore,
43: when said warning device 11, 12 is initiated to emit the first warning signal, the method further comprises:
   39: determining if the vehicle driver 19 at least partly is looking outside a warning area 24, 25 that at least partly encompasses said warning device 11, 12, and if that is the case;
   40: issuing a second warning signal.

According to the invention, the method further comprises determining whether a target vehicle 13 at least partly is within a blind spot field 14, 15 that is outside a coverage 34, 35, 36 of available rear-view mirrors 8, 9, 10 for the vehicle driver 19.

According to some aspects, the method further comprises determining the following cases:
- if the vehicle driver 19 is about to change lanes,
- if there at least partly is a target vehicle 13 within a blind spot field 14, 15 that corresponds to the possible lane change, and
- if the vehicle driver 19 at least partly is looking outside a warning area 24, 25 that corresponds to the possible lane change,
and if all these cases are fulfilled, the method further comprises issuing the second warning signal.

According to some aspects, the method further comprises determining if the vehicle driver 19 is about to change lanes by:
- determining a signal indicator lever 28 setting,
- determining change of steering angle by using a yaw angle sensor arrangement 30, and/or
- determining vehicle movement in relation to road markings by using an external front-facing camera arrangement 29.

## Claims

1. A vehicle safety system (37) comprising at least one image sensor device (17), a control unit arrangement (5, 20, 22), at least one environmental detection device (3) that is adapted to determine whether a target vehicle (13) at least partly is within a blind spot field (14, 15) that is outside a coverage (34, 35, 36) of available rear-view mirrors (8, 9, 10) for the vehicle driver (19), and at least one warning device (11, 12) adapted to emit a first warning signal in the form of a warning light when a target vehicle (13) travelling in an adjacent second lane (2b), constituting a target lane (2b), is determined to at least partly be present in a left-hand blind spot field (14) or right-hand blind spot field (15), where said image sensor device (17) is arranged to detect eye configurations of a vehicle driver (19) and to transfer these images to an image control unit (20), where the image control unit (20) is adapted to process the acquired images and determine the position of a driver's eyes (21), and to determine where the gaze (23) of the eyes (21) falls, **characterized in that** when said warning device (11, 12) is initiated to emit the first warning signal in the form of a warning light, the image control unit (20) is arranged to determine if the vehicle driver (19) at least partly is looking outside a warning area (24, 25) that encompasses said warning device (11, 12), and **in that** case the control unit arrangement (5, 20, 22) is arranged to issue a second warning signal, where the second warning signal is constituted by a sound signal, a tactile signal or any combination of these.

2. The vehicle safety system (37) according to claim 1, wherein the vehicle safety system (37) further is adapted to determine the following cases:
- if the vehicle driver (19) is about to change lanes,
- if there at least partly is a target vehicle (13) within a blind spot field (14, 15) that corresponds to the possible lane change, and
- if the vehicle driver (19) at least partly is looking outside a warning area (24, 25) that encompasses a warning device (11, 12) associated with the possible lane change,
and if all these cases are fulfilled, the vehicle safety system is adapted to issue the second warning signal.

3. The vehicle safety system according to claim 2, wherein the vehicle safety system (37) is adapted to determine if the vehicle driver (19) is about to change lanes by being adapted to:
- determine a signal indicator lever (28) setting,
- determine change of steering angle by means of a yaw angle sensor arrangement (30), and/or
- determine vehicle movement in relation to road markings by means of an external front-facing camera arrangement (29) .

4. A method for detecting attentiveness of a vehicle driver (19) with respect to at least one warning device (11, 12) that is initiated to emit a first warning signal in the form of a warning light, where the method comprises:
determining whether a target vehicle (13) at least partly is within a blind spot field (14, 15) that is outside a coverage (34, 35, 36) of available rear-view mirrors (8, 9, 10) for the vehicle driver (19);
emitting the first warning signal in the form of a warning light when a target vehicle (13) travelling in an adjacent second lane (2b), constituting a target lane (2b), is determined to at least partly be present in a left-hand blind spot field (14) or right-hand blind spot field;
(38) detecting eye configurations of the vehicle driver (19) and determining the position of a driver's eyes (21), and where the gaze (23) of the eyes (21) falls; **characterized in that**,
(43) when said warning device (11, 12) is initiated to emit the first warning signal, the method further comprises:
(39) determining if the vehicle driver (19) at least partly is looking outside a warning area (24, 25) that encompasses said warning device (11, 12), and if that is the case:
(40) issuing a second warning signal where the second warning signal is constituted by a sound signal, a tactile signal or any combination of these.

5. The method according to claim 4, wherein the method further comprises determining the following cases:
- if the vehicle driver (19) is about to change lanes,
- if there at least partly is a target vehicle (13) within a blind spot field (14, 15) that corresponds to the possible lane change, and
- if the vehicle driver (19) at least partly is looking outside a warning area (24, 25) that encompasses a warning device (11, 12) associated with the possible lane change,
and if all these cases are fulfilled, the method further comprises issuing the second warning signal.

6. The method according to claim 5, wherein the method further comprises determining if the vehicle driver (19) is about to change lanes by:
- determining a signal indicator lever (28) setting,
- determining change of steering angle by using a yaw angle sensor arrangement (30), and/or
- determining vehicle movement in relation to road markings by using an external front-facing camera arrangement (29) .

## Patentansprüche

1. Fahrzeugsicherheitssystem (37), umfassend mindestens eine Bildsensorvorrichtung (17), eine Steuereinheitsanordnung (5, 20, 22), mindestens eine Umgebungserfassungsvorrichtung (3), die angepasst ist, um zu bestimmen, ob ein Zielfahrzeug (13) mindestens teilweise innerhalb eines toten Winkelfeldes (14, 15) liegt, das sich außerhalb einer Abdeckung (34, 35, 36) von verfügbaren Rückspiegeln (8, 9, 10) für den Fahrzeugführer (19) befindet, und mindestens eine Warnvorrichtung (11, 12), die angepasst ist, um ein erstes Warnsignal in Form einer Warnleuchte abzugeben, wenn ein Zielfahrzeug (13), das sich in einer benachbarten zweiten Fahrspur (2b) bewegt, die eine Zielfahrspur (2b) bildet, bestimmt ist, um in einem linken toten Winkelfeld (14) oder einem rechten toten Winkelfeld (15) mindestens teilweise vorhanden zu sein, wobei die Bildsensorvorrichtung (17) angeordnet ist, um Augenkonfigurationen eines Fahrzeugführers (19) zu erfassen und um diese Bilder an eine Bildsteuereinheit (20) zu übertragen, wobei die Bildsteuereinheit (20) angepasst ist, um die erlangten Bilder zu verarbeiten und die Position der Augen (21) eines Fahrers zu bestimmen und um zu bestimmen, wohin der Blick (23) der Augen (21) fällt, **dadurch gekennzeichnet, dass,** wenn die Warnvorrichtung (11, 12) veranlasst wird, das erste Warnsignal in Form einer Warnleuchte abzugeben, die Bildsteuereinheit (20) angeordnet ist, um zu bestimmen, ob der Fahrzeugführer (19) mindestens teilweise außerhalb eines Warnbereichs (24, 25) schaut, der die Warnvorrichtung (11, 12) umschließt, und wobei in diesem Fall die Steuereinheitsanordnung (5, 20, 22) angeordnet ist, um ein zweites Warnsignal auszugeben, wobei das zweite Warnsignal durch ein Tonsignal, ein taktiles Signal oder eine beliebige Kombination dieser gebildet wird.

2. Fahrzeugsicherheitssystem (37) nach Anspruch 1, wobei das Fahrzeugsicherheitssystem (37) ferner angepasst ist, um die folgenden Fälle zu bestimmen:
- ob der Fahrzeugführer (19) im Begriff ist, die Fahrspuren zu wechseln,
- ob sich ein Zielfahrzeug (13) mindestens teilweise innerhalb eines toten Winkelfeldes (14, 15) befindet, das dem möglichen Fahrspurwechsel entspricht, und
- ob der Fahrzeugführer (19) mindestens teilweise außerhalb eines Warnbereichs (24, 25) schaut, der eine Warnvorrichtung (11, 12) umschließt, die mit dem möglichen Fahrspurwechsel verknüpft ist,
und wobei, wenn alle diese Fälle erfüllt sind, das
Fahrzeugsicherheitssystem angepasst wird, um das zweite Warnsignal auszugeben.

3. Fahrzeugsicherheitssystem nach Anspruch 2, wobei das Fahrzeugsicherheitssystem (37) angepasst ist, um zu bestimmen, ob der Fahrzeugführer (19) im Begriff ist, die Fahrspuren zu wechseln, indem es angepasst ist zum:
- Bestimmen einer Einstellung eines Signalblinkerhebels (28),
- Bestimmen einer Änderung eines Lenkwinkels mittels einer Gierwinkelsensoranordnung (30) und/oder
- Bestimmen einer Fahrzeugbewegung in Bezug auf Straßenmarkierungen mittels einer externen nach vorne gerichteten Kameraanordnung (29).

4. Verfahren zum Erfassen einer Aufmerksamkeit eines Fahrzeugführers (19) in Bezug auf mindestens eine Warnvorrichtung (11, 12), die veranlasst wird, ein erstes Warnsignal in Form einer Warnleuchte abzugeben, wobei das Verfahren umfasst:
Bestimmen, ob sich ein Zielfahrzeug (13) mindestens teilweise innerhalb eines toten Winkelfeldes (14, 15) befindet, das sich außerhalb einer Abdeckung (34, 35, 36) von verfügbaren Rückspiegeln (8, 9, 10) für den Fahrzeugführer (19) befindet;
Abgeben des ersten Warnsignals in Form einer Warnleuchte, wenn für ein Zielfahrzeug (13), das sich in einer benachbarten zweiten Fahrspur (2b) bewegt, die eine Zielfahrspur (2b) bildet, bestimmt wird, mindestens teilweise in einem linken toten Winkelfeld (14) oder einem rechten toten Winkelfeld vorhanden zu sein;
(38) Erfassen von Augenkonfigurationen des Fahrzeugführers (19) und ein Bestimmen der Position der Augen (21) eines Fahrers und wohin der Blick (23) der Augen (21) fällt;
**dadurch gekennzeichnet, dass,**
(43) wenn die Warnvorrichtung (11, 12) veranlasst wird, das erste Warnsignal abzugeben, das Verfahren ferner umfasst:
(39) Bestimmen, ob der Fahrzeugführer (19) mindestens teilweise außerhalb eines Warnbereichs (24, 25) schaut, der die Warnvorrichtung (11, 12) umschließt, und wenn dies der Fall ist:
(40) Ausgeben eines zweiten Warnsignals, wobei das zweite Warnsignal durch ein Tonsignal, ein taktiles Signal oder eine beliebige Kombination dieser gebildet wird.

5. Verfahren nach Anspruch 4, wobei das Verfahren ferner das Bestimmen der folgenden Fälle umfasst:
- ob der Fahrzeugführer (19) im Begriff ist, die Fahrspuren zu wechseln,
- ob sich ein Zielfahrzeug (13) mindestens teilweise innerhalb eines toten Winkelfeldes (14, 15) befindet, das dem möglichen Fahrspurwechsel entspricht, und
- ob der Fahrzeugführer (19) mindestens teilweise außerhalb eines Warnbereichs (24, 25) schaut, der eine Warnvorrichtung (11, 12) umschließt, die mit dem möglichen Fahrspurwechsel verknüpft ist,
und wobei, wenn alle diese Fälle erfüllt sind, das Verfahren ferner ein Ausgeben des zweiten Warnsignals umfasst.

6. Verfahren nach Anspruch 5, wobei das Verfahren ferner das Bestimmen umfasst, ob der Fahrzeugführer (19) im Begriff ist, die Fahrspuren zu wechseln durch:
- Bestimmen einer Einstellung des Signalblinkerhebels (28),
- Bestimmen einer Änderung des Lenkwinkels durch Verwenden einer Gierwinkelsensoranordnung (30) und/oder
- Bestimmen der Fahrzeugbewegung in Bezug auf Straßenmarkierungen durch Verwenden einer externen nach vorne gerichteten Kameraanordnung (29).

## Revendications

1. Système de sécurité de véhicule (37) comprenant au moins un dispositif de capteur d'image (17), un agencement d'unité de commande (5, 20, 22), au moins un dispositif de détection environnementale (3) qui est adapté pour déterminer si un véhicule cible (13) se trouve au moins en partie à l'intérieur d'un champ d'angle mort (14, 15) qui se trouve en dehors d'une couverture (34, 35, 36) des rétroviseurs disponibles (8, 9, 10) pour le conducteur du véhicule (19), et au moins un dispositif d'avertissement (11, 12) adapté pour émettre un premier signal d'avertissement sous la forme d'un voyant d'avertissement lorsqu'un véhicule cible (13) circulant dans une seconde voie adjacente (2b), constituant une voie cible (2b), est déterminé comme étant présent au moins en partie dans un champ d'angle mort gauche (14) ou un champ d'angle mort droit (15), où ledit dispositif capteur d'image (17) est agencé pour détecter des configurations des yeux d'un conducteur de véhicule (19) et pour transférer ces images à une unité de commande d'images (20), où l'unité de commande d'images (20) est adaptée pour traiter les images acquises et déterminer la position des yeux d'un conducteur (21), et pour déterminer où se porte le regard (23) des yeux (21), **caractérisé en ce que** lorsque ledit dispositif d'avertissement (11, 12) est déclenché pour émettre le premier signal d'avertissement sous la forme d'un voyant d'avertissement, l'unité de commande d'images (20) est agencée pour déterminer si le conducteur du véhicule (19) regarde au moins en partie à l'extérieur d'une zone d'avertissement (24, 25) qui englobe ledit dispositif d'avertissement (11, 12), et dans ce cas, l'agencement d'unité de commande (5, 20, 22) est agencé pour délivrer un second signal d'avertissement, où le second signal d'avertissement est constitué par un signal sonore, un signal tactile ou toute combinaison de ceux-ci.

2. Système de sécurité de véhicule (37) selon la revendication 1, dans lequel le système de sécurité de véhicule (37) est en outre adapté pour déterminer les cas suivants :
- si le conducteur du véhicule (19) est sur le point de changer de voie,
- s'il y a au moins en partie un véhicule cible (13) dans un champ d'angle mort (14, 15) qui correspond au changement de voie possible, et
- si le conducteur du véhicule (19) regarde au moins en partie à l'extérieur d'une zone d'avertissement (24, 25) qui englobe un dispositif d'avertissement (11, 12) associé à un éventuel changement de voie,
et si tous ces cas sont remplis, le système de sécurité du véhicule est adapté pour délivrer le second signal d'avertissement.

3. Système de sécurité de véhicule selon la revendication 2, dans lequel le système de sécurité de véhicule (37) est adapté pour déterminer si le conducteur du véhicule (19) est sur le point de changer de voie en étant adapté pour :
- déterminer un réglage de la manette de clignotant (28),
- déterminer un changement d'angle de braquage au moyen d'un agencement de capteur d'angle de lacet (30), et/ou
- déterminer le mouvement du véhicule par rapport aux marquages routiers au moyen d'un agencement de caméra externe orientée vers l'avant (29).

4. Procédé permettant de détecter l'attention d'un conducteur de véhicule (19) par rapport à au moins un dispositif d'avertissement (11, 12) qui est déclenché pour émettre un premier signal d'avertissement sous la forme d'un voyant d'avertissement, où le procédé comprend :
la détermination du fait de savoir si un véhicule cible (13) se trouve au moins en partie dans un champ d'angle mort (14, 15) qui se trouve en dehors d'une couverture (34, 35, 36) de rétroviseurs disponibles (8, 9, 10) pour le conducteur du véhicule (19) ;
l'émission du premier signal d'avertissement sous la forme d'un voyant d'avertissement lorsqu'un véhicule cible (13) circulant dans une seconde voie adjacente (2b), constituant une voie cible (2b), est déterminé comme étant au moins partiellement présent dans un champ d'angle mort gauche (14) ou un champ d'angle mort droit ;
(38) la détection de configurations des yeux du conducteur du véhicule (19) et la détermination de la position des yeux du conducteur (21), et où se porte le regard (23) des yeux (21) ;
**caractérisé en ce que,**
(43) lorsque ledit dispositif d'avertissement (11, 12) est déclenché pour émettre le premier signal d'avertissement, le procédé comprend en outre :
(39) la détermination du fait de savoir si le conducteur du véhicule (19) regarde au moins en partie à l'extérieur d'une zone d'avertissement (24, 25) qui englobe ledit dispositif d'avertissement (11, 12), et si tel est le cas :
(40) le fait de délivrer un second signal d'avertissement où le second signal d'avertissement est constitué par un signal sonore, un signal tactile ou toute combinaison de ceux-ci.

5. Procédé selon la revendication 4, dans lequel le procédé comprend en outre la détermination des cas suivants :
- si le conducteur du véhicule (19) est sur le point de changer de voie,
- s'il y a au moins en partie un véhicule cible (13) dans un champ d'angle mort (14, 15) qui correspond au changement de voie possible, et
- si le conducteur du véhicule (19) regarde au moins en partie à l'extérieur d'une zone d'avertissement (24, 25) qui englobe un dispositif d'avertissement (11, 12) associé à un éventuel changement de voie,
et si tous ces cas sont remplis, le procédé comprend en outre le fait de délivrer le second signal d'avertissement.

6. Procédé selon la revendication 5, dans lequel le procédé comprend en outre la détermination du fait de savoir si le conducteur du véhicule (19) est sur le point de changer de voie en :
- déterminant un réglage de la manette de clignotant (28),
- déterminant un changement d'angle de braquage à l'aide d'un agencement de capteur d'angle de lacet (30), et/ou
- déterminant le mouvement du véhicule par rapport aux marquages routiers à l'aide d'un agencement de caméra externe orientée vers l'avant (29).
